# EUROPEAN PATENT SPECIFICATION

(11) **EP 0 470 853 B1**
(45) Date of publication and mention of the grant of the patent: **26.11.1997**
(21) Application number: 91307338.3
(22) Date of filing: 09.08.1991
(51) Int. Cl.: G01L 9/00

(54) **Method of measuring pressures using a tuning fork crystal oscillator**
Verfahren zum Messen von Drucken mit einer schwingenden Kristallstimmgabel
Méthode de mesure de pression utilisant un oscillateur à diapason cristallin

(30) Priority: 10.08.1990 JP 212417/90
(43) Date of publication of application: 12.02.1992
(73) Proprietor: VACUUM PRODUCTS KABUSHIKI KAISHA, Musashino, Tokyo (JP)
(72) Inventor: Hojoh, Hisao, Musashino, Tokyo (JP)
(74) Representative: Maury, Richard Philip

(56) References cited:
- EP-A- 0 379 840
- PATENT ABSTRACTS OF JAPAN vol. 10, no. 15 (P-422)(2072) 21 January 1986; & JP-A-60 171 428 ( SEIKO DENSHI KOGYO K.K. ) 4 September 1985

## Description

The present invention relates to a method of measuring pressures using a tuning fork crystal oscillator.

There is a conventional method which allows for use of a tuning fork crystal oscillator (which will be referred to simply as "fork oscillator") to measure pressures (primarily pressures in vacuum) (such as the one disclosed in Japanese utility model application, publication No. 64(1989)-38547). It is known that the fork oscillator has a resonance resistance which increases in proportion to the gas pressure when a gaseous substance is in the region of molecule flow, and increases in proportion to the square of half the pressure in the viscous flow region. The conventional method makes use of this property of the fork oscillator. It is also known that the fork oscillator provides a useful pressure measuring means since it is capable of measuring a wide range of pressures from atmospheric pressure to pressures of 10⁻² to 10⁻³ Torr.

According to the conventional method which uses the fork oscillator to measure those pressures, the fork oscillator is placed in the space of a particular gaseous substance whose pressure is to be measured thereby, and an oscillator circuit is used to cause the fork oscillator to produce oscillations. Then, the pressure in the gaseous substance may be determined from the difference ΔZ (= Z - Zₒ) between the resonance resistance Z at that time and the natural resonance resistance Zₒ for the fork oscillator (the value in a high vacuum).

In the conventional method that uses the fork oscillator to measure pressures, as described above, the temperature of the fork oscillator usually varies indefinitely during the measuring process, which may cause large errors in measuring the pressure in the lower pressure range. This would disadvantageously make any accurate pressure measurement impossible.

The natural resonance resistance Zₒ as described above remains stable over a wide temperature range (-20 °C to +60°C), such that it only changes by a factor of several K ohms ( Ω) in that temperature range, while the value of the resistance difference ΔZ decreases by the order of several K ohms in the pressure range of between 10⁻¹ and 10⁻² Torr, and decreases by the order of several tens of ohms in the pressure range of between 10⁻² and 10⁻³ Torr, which means that the value of ΔZ decreases as the pressure is reduced. The change in the natural resonance resistance Zₒ that is caused by any changes in the temperature of the fork oscillator cannot be neglected. This therefore imposes limitations on the ability of the fork oscillator to measure pressure when the fork oscillator is used.

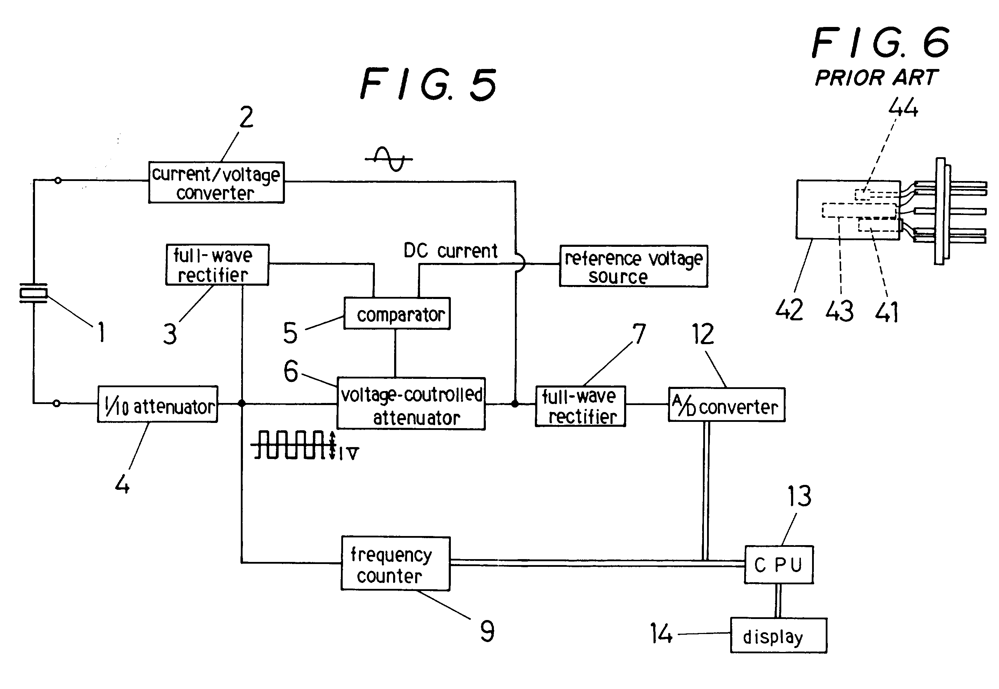

In order to prevent the natural resonance resistance Zₒ of the fork oscillator from being affected by any changes in its temperature, there is another pressure measuring probe, as shown in Fig. 6, which includes a fork oscillator 41 buried in an aluminium block 42, and a heater 43 and a temperature sensor 44 also buried in the same aluminium block thereby maintaining the fork oscillator 41 at a constant temperature.

For such a pressure measuring probe, however, the aluminium block 42 has an inherent thermal capacity that causes a time lag or delay to occur before the fork oscillator 41 can reach the specific temperature at which it is to be maintained. Specifically, one problem is the slow response time when the probe is measuring pressure, and another problem is that the measuring circuit must include an additional temperature control circuit for the heater 43 and temperature sensor 44, which makes the measuring circuit complicated and expensive.

In light of the above problems, the present invention provides a method whereby pressure can be measured with high precision without the need to provide the extra complexities in the fork oscillator.

We acknowledge the disclosure in JP-A-60171428 and Patent Abstracts of Japan vol. 10, no. 15 (P-422) (2072) of a gas manometer using a piezo-electric vibrator driven at variable frequency and coupled to a peak holding circuit which gives an output representative of AC resistance at resonance. Further, EP-A-0379840 discloses a quartz tuning fork manometer which corrects for contamination of the fork by providing a reference value representative of the resonant frequency of the quartz when new and uncontaminated; an identical tuning fork is used for this.

The present invention is defined in Claim 1 below.

In the example described below, the resonance resistance Z may be determined by driving the fork oscillator at the established AC voltage that is applied across it, and then obtaining the resonance current at that time by performing an arithmetic operation on it. The natural resonance Z_{T} at the temperature T may be measured by setting a voltage representative of a value Z_{c} for the resonance resistance Zₒ at a predetermined reference temperature (20°C, for example) as a reference voltage, obtaining a voltage equal to a difference ΔZ_{T} between Zo and Zc at the temperature T from the resonance frequency "f", and enabling an operational amplifier to combine the two input voltages. The output of the operational amplifier determines the natural resonance resistance at the temperature T. In this way, temperature T is determined substantially from the resonance frequency "f", and the temperature T is used for determining the difference ΔZ_{T}.

The values of Zo, Z_{T}, Zc and ΔZ_{T} which are used herein are defined to have the following respective meanings.

Zo is defined as the natural resonance resistance for the fork oscillator, i.e. the value of resonance resistance in a high vacuum. This value may vary according to changes in temperature T, and Z_{T} = Zo (T).

Zc is defined as the natural resonance resistance Zo at a reference temperature T = Tc (20°C, for example). Thus Zc = Zo (T = Tc).

Z (P, T) is the resonance resistance in gas at pressure P, at variable temperature T.

ΔZ is the resonance resistance difference: ΔZ = Z - Z_{T}.

ΔZ_{T} is defined as the difference between Z_{T} and Zc, i.e. ΔZ_{T}= Z_{T} - Zc.

According to the pressure measuring method of the present invention, the difference ΔZ may be determined from the actual natural resonance resistance Z_{T} of the fork oscillator and the resonance resistance Z that corresponds to the pressure, even if there are any changes in the temperature of the fork oscillator during the measuring process. Thus, the pressure may always be measured with high precision without any errors.

Those and other objects, features, and merits of the present invention will become more apparent from the detailed description of the preferred embodiments of the invention that follows with reference to the accompanying drawings, in which:
Fig. 1 is a graphical representation that illustrates the characteristic curves showing the relationships between the varying temperature of the fork oscillator used in the embodiments of the present invention and the respective corresponding changes in the resonance frequency and natural resonance resistance;
Fig. 2 is a graphical representation that illustrates the characteristic curve showing the pressure difference for the fork oscillator;
Fig. 3 is a block diagram of a measuring circuit according to one embodiment of the present invention;
Fig. 4 is a circuit diagram for an arithmetic circuit in the embodiment of Fig. 3;
Fig. 5 is a block diagram of a measuring circuit according to another embodiment of the present invention;
Fig. 6 is a front view of a conventional fork oscillator temperature control apparatus.

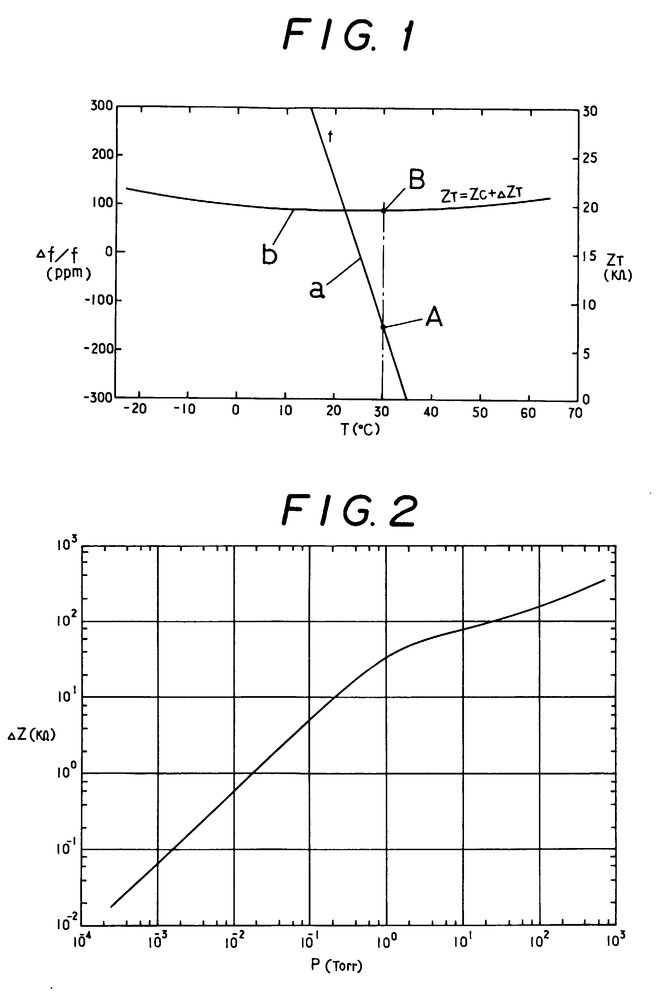

As shown in Fig. 1, a tuning fork oscillator (which is referred to as a "fork oscillator") that may be used for the purposes of the present invention presents a linear operational characteristic, as identified by the letter "a", showing the relationship between the temperature T and the resonance frequency f. It also presents a curved operational characteristic , as identified by the letter "b", which shows the relationship between the temperature T and the natural resonance resistance Z_{T}. As such, this fork oscillator should also have an operating characteristic as shown in Fig. 2, which shows the relationship between the pressure P in a particular gaseous substance (air) and the resonance resistance difference ΔZ = Z - Z_{T.}

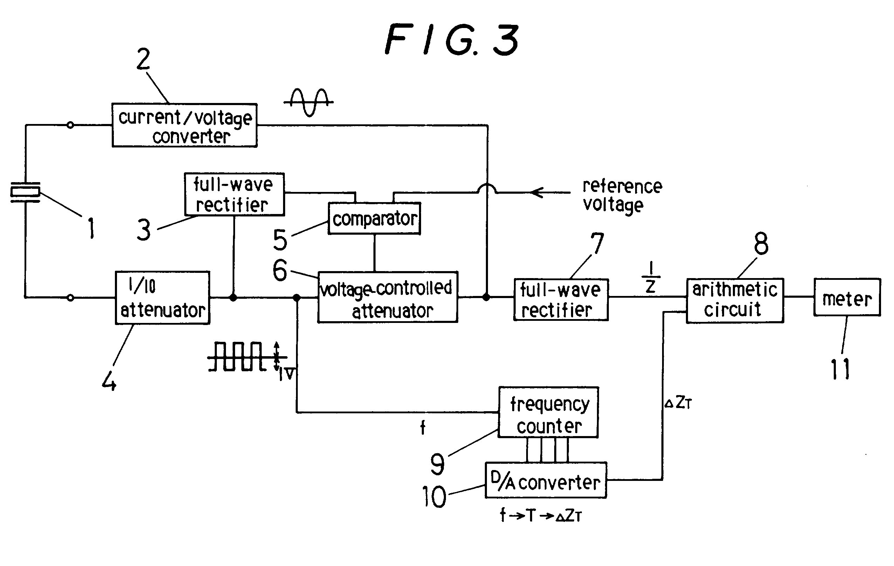

Such a fork oscillator 1 as the one that has the operating characteristics described above may be used to constitute a pressure measuring circuit, as shown in Fig. 3. Referring to Fig. 3, the measuring circuit includes a current/voltage converter 2, a full-wave rectifier 3,a 1/10 attenuator 4, a comparator 5, a voltage-controlled attenuator 6, a full-wave rectifier 7, an arithmetic circuit 8, a frequency counter 9, a digital-to-analogue (D/A) converter 10, and a meter 11.

The full-wave rectifier 3, 1/10 attenuator 4, comparator 5 and voltage-controlled attenuator 6 form a stabilized AC voltage supply, and the stabilized AC voltage supply and the fork oscillator 1 form a self-excited oscillator.

In the measuring circuit that has the arrangement as described above, a signal that corresponds to a resonance current in the oscillator circuit is applied through the current/voltage converter 2 and full-wave rectifier 7 to one of the inputs of the arithmetic circuit 8. As the signal that corresponds to the resonance current is also the signal that corresponds to the resonance resistance Z, the signal that is applied to the one input of the arithmetic circuit 8 effectively represents the signal I/Z related to the resonance resistance Z. A signal representing ΔZ_{T} is applied to the other input of the arithmetic circuit 8 from the frequency counter 9 and D/A converter 10.

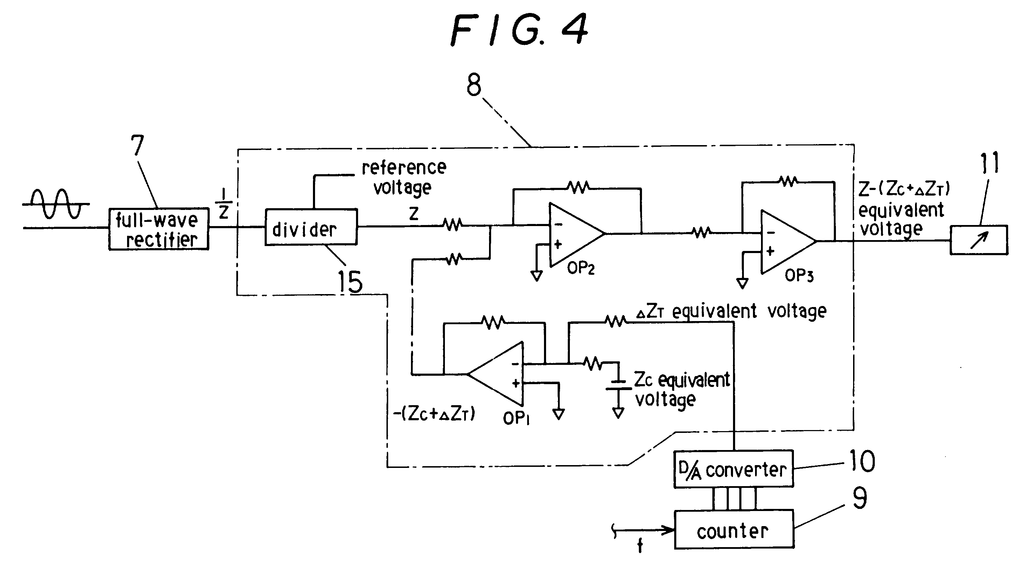

The arithmetic circuit 8 has the arrangement as shown in Fig. 4, including operational amplifiers OP₁ to OP₃ and a divider 15.

The frequency counter 9 and D/A converter 10 respond to the input resonance resistance "f" to operate according to the characteristic curves shown in Fig. 1, and provides the resistance value ΔZ_{T} that represents the temperature of the fork oscillator.

The operational amplifier OP₁ responds to the input signal ΔZ_{T} from the frequency counter and D/A converter and the input reference voltage Z_{c}, and provides an output of - (Z_{c} + ΔZ_{T}). Then, the output of - (Z_{c} + ΔZ_{T}), that is, the value of -Z_{T}, and the value of the resonance resistance Z from the full-wave rectifier 7 are added together, the result of Z - Z_{T} being fed to operational amplifier OP₂ whose output is then fed to OP3, whose output may be used to drive the meter 11.

In the arrangement as described above, it may be appreciated that point A in Fig. A is determined substantially from the resonance frequency "f", then point B is determined. Thus, the natural resonance resistance Zₒ of the fork oscillator 1 can represent the value Z_{T} for the natural resonance resistance at any temperature that occurs during the measuring process, rather than the fixed value in the high vacuum according to the prior art method. Any errors that may be caused by any changes in the temperature of the fork oscillator I can be eliminated.

Referring next to Fig. 5, another embodiment of the measuring circuit is shown. This measuring circuit provides a digital display, differently from the preceding embodiment that provides an analog display. In Fig. 5, similar elements are given the same reference numerals as those in the preceding embodiment. This embodiment differs from the preceding embodiment in that the resonance resistance 1/Z from the full-wave rectifier 7 is applied to A/D converter 12 which provides the corresponding digital output. This digital output is applied to CPU 13 together with the output from the frequency counter 9, and CPU 13 performs the operations on them. The output of CPU 13 may be presented in digital forms on a display 14. The CPU 13 may perform the same operations as described in the previous embodiment, and may contain memory for storing programs and the data as shown in Fig. 1.

Like the preceding embodiment, the current embodiment can determine the pressures from the natural resonance resistance Z_{T} at the temperature of the fork oscillator during the measuring process, and can also eliminate any errors that may be caused by any changes in the temperature.

As it may be understood from the foregoing description, the method according to the present invention allows any changes in the temperature of the fork oscillator to be detected, and a pressure difference represented by ΔZ to be determined from the natural resonance resistance Z_{T} at that temperature and the resonance resistance Z corresponding to the pressure, thereby determining the pressure . Thus, any errors that may be caused by any changes in the temperature of the fork oscillator during the measuring process can be eliminated, and pressure can be measured with high precision. As there are no errors due to any changes in temperature, the possible measuring range can be extended to a lower pressure range, covering a broader pressure range than hitherto.

Although the present invention has been described with reference to the several preferred embodiments thereof, it should be understood that various changes and modifications may be made without departing from the scope of the invention as defined in the appended claims.

## Claims

1. A method of measuring the pressure of a gaseous medium using a tuning fork crystal oscillator, comprising:
measuring the resonance resistance Z of the crystal resonating in the gaseous medium, and providing an output as a function of the resonance resistance and representative of the pressure;
characterized by measuring the frequency f of resonant oscillation and determining the temperature T of the crystal from that frequency and from a record of its variation (a, Fig 1) with temperature;
determining a correction ΔZ to be applied to the measured resonance resistance Z, from a predetermined record of the variation of natural resonance resistance (Z_{T}) with temperature T, to compensate the resonance resistance-pressure variability for the difference between the determined temperature T and a reference temperature T_{c} ;
applying (8,10) the temperature correction ΔZ to the measured resonance resistance Z and providing the output (11) proportional to the corrected resonance resistance.

2. A method as defined in Claim 1, wherein the resonance resistance Z is measured by driving the tuning fork oscillator at a stabilized AC voltage to cause it provide a resonance current, and determining the resonance resistance from the resonance current by conversion.

3. A method as defined in Claim 1 or 2, including setting a voltage representative of the value Z_{c} of the natural resonance resistance Zₒ at a predetermined reference temperature Tc and in a vacuum as a reference voltage, combining this reference voltage with a voltage signal representative of ΔZ_{T} which is representative of the measured resonance frequency f, combining the resultant signal with a signal Z representative of the resonance resistance Z to provide the output as an analogue signal.

4. A method as defined in any preceding claim,
including setting a voltage representative of the value Z_{c} of the natural resonance resistance Zₒ at the predetermined reference temperature T_{c} and in a vacuum as a reference voltage, using a D/A converter to respond to the said frequency f to provide a voltage signal (ΔZ_{T}) as a predetermined function of that frequency f, and combining the said voltage representative of Z_{c} with the said voltage signal (ΔZ_{T}) derived from frequency f to produce the said correction ΔZ, prior to the said step of applying the temperature correction ΔZ to the measured resonance resistance Z.

## Patentansprüche

1. Verfahren zum Messen des Drucks eines gasförmigen Mediums mit einem Stimmgabel-Quarzoszillator, das den Schritt aufweist, bei dem:
der Resonanzwiderstand Z des in dem gasförmigen Medium schwingenden Quarzkristalls gemessen wird, und ein für den Druck repräsentatives Ausgangssignal als Funktion des Resonanzwiderstandes erhalten wird;
dadurch gekennzeichnet, daß die Frequenz f der Resonanzschwingung gemessen wird, und die Temperatur T des Quarzkristalls aus dieser Frequenz und aus einer Aufzeichnung ihrer Veränderung (a, Fig. 1) mit der Temperatur bestimmt wird;
eine bei dem gemessenen Resonanzwiderstand Z vorzunehmende Korrektur ΔZ aus einer vorher vorgenommenen Aufzeichnung der Veränderung des Eigenresonanzwiderstandes (Z_{T}) mit der Temperatur T bestimmt wird, um bei der Resonanzwiderstand/Druck-Variabilität eine Kompensation für die Differenz zwischen der bestimmten Temperatur T und einer Bezugstemperatur T_{c} vorzunehmen;
die Temperaturkorrektur ΔZ bei dem gemessenen Resonanzwiderstand Z vorgenommen wird (8, 10), und das zu dem korrigierten Resonanzwiderstand proportionale Ausgangssignal (11) erhalten wird.

2. Verfahren gemäß Anspruch 1, wobei zur Messung des Resonanzwiderstandes Z der Stimmgabel-0szillator mit einer stabilisierten Wechselspannung gesteuert wird, die einen Resonanzstrom hervorruft, und der Resonanzwiderstand aus dem Resonanzstrom durch Umwandlung bestimmt wird.

3. Verfahren gemäß Anspruch 1 oder 2, bei dem eine Spannung, die repräsentativ für den Wert Z_{c} des Eigenresonanzwiderstandes Zₒ bei einer vorgegebenen Bezugstemperatur T_{c} und in einem Vakuum ist, als Bezugsspannung eingestellt wird, diese Bezugsspannung mit einem für ΔZ_{T} repräsentativen Spannungssignal kombiniert wird, das repräsentativ für die gemessene Resonanzfrequenz f ist, und das sich ergebende Signal mit einem für den Resonanzwiderstand Z repräsentativen Signal Z kombiniert wird, um das Ausgangssignal als analoges Signal zu erhalten.

4. Verfahren gemäß irgendeinem vorhergehenden Anspruch, bei dem eine Spannung, die repräsentativ für den Wert Z_{c} des Eigenresonanzwiderstandes Zₒ bei der vorgegebenen Bezugstemperatur T_{c} und in einem Vakuum ist, als Bezugsspannung eingestellt wird, ein D/A-Umsetzer verwendet wird, der auf die Frequenz f anspricht und ein Spannungssignal (ΔZ_{T}) als vorgegebene Funktion der Frequenz f liefert, und die für Z_{c} repräsentative Spannung mit dem von der Frequenz f abgeleiteten Spannungssignal (ΔZ_{T}) kombiniert wird, um die Korrektur ΔZ zu erhalten, bevor die Temperaturkorrektur ΔZ bei dem gemessenen Resonanzwiderstand Z vorgenommen wird.

## Revendications

1. Un procédé pour mesurer la pression d'un milieu gazeux en utilisant un oscillateur à cristal de type diapason, comprenant:
la mesure de la résistance de résonance Z du cristal résonnant dans le milieu gazeux, et la génération d'un signal de sortie qui est fonction de la résistance de résonance et est représentatif de la pression;
caractérisé en ce qu'on mesure la fréquence f de l'oscillation de résonance et on détermine la température T du cristal à partir de cette fréquence et à partir d'un enregistrement de sa variation (a, figure 1) en fonction de la température;
on détermine une correction ΔZ à appliquer à la résistance de résonance Z mesurée, à partir d'un enregistrement prédéterminé de la variation de la résistance de résonance naturelle (Z_{T}) en fonction de la température T, pour compenser la variabilité de la résistance de résonance en fonction de la pression, pour tenir compte de la différence entre la température déterminée T et une température de référence T_{c};
on applique (8, 10) la correction de température ΔZ à la résistance de résonance mesurée Z, et on fournit le signal de sortie (11) proportionnel à la résistance de résonance corrigée.

2. Un procédé défini dans la revendication 1, dans lequel la résistance de résonance Z est mesurée en excitant l'oscillateur à diapason avec une tension alternative stabilisée, pour qu'il produise un courant de résonance, et en déterminant la résistance de résonance à partir du courant de résonance, par conversion.

3. Un procédé défini dans la revendication 1 ou 2, comprenant la fixation d'une tension représentative de la valeur Z_{c} de la résistance de résonance naturelle Zₒ à une température de référence prédéterminée T_{c} et dans une condition de vide, à titre de tension de référence, la combinaison de cette tension de référence avec un signal de tension représentatif de ΔZ_{T}, qui est représentatif de la fréquence de résonance mesurée f, et la combinaison du signal résultant avec un signal Z représentatif de la résistance de résonance Z, pour fournir le signal de sortie sous la forme d'un signal analogique.

4. Un procédé défini dans l'une quelconque des revendications précédentes, comprenant la fixation d'une tension représentative de la valeur Z_{c} de la résistance de résonance naturelle Zₒ à la température de référence prédéterminée T_{c} et dans une condition de vide, à titre de tension de référence, l'utilisation d'un convertisseur N/A pour réagir à la fréquence f de façon à fournir un signal de tension (ΔZ_{T}) sous la forme d'une fonction prédéterminée de la fréquence f, et la combinaison de cette tension représentative de Z_{c} avec le signal de tension (ΔZ_{T}) qui est obtenu à partir de la fréquence f, pour produire la correction ΔZ précitée, avant l'étape d'application de la correction de température ΔZ à la résistance de résonance Z mesurée.
